# EUROPEAN PATENT APPLICATION

(11) **EP 4 723 433 A1**
(43) Date of publication of application: **08.04.2026**
(21) Application number: 24902803.6
(22) Date of filing: 10.12.2024
(51) Int. Cl.: H02K 1/14, H02K 3/28, H02K 3/52, H02K 1/278

(54) **STATOR MODULE, MOTOR AND ELECTRICAL DEVICE**

(30) Priority: 13.12.2023 CN 202311715531
(71) Applicant: Midea Group (Shanghai) Co., Ltd., Shanghai 201702 (CN); Midea Group Co., Ltd., Foshan, Guangdong 528311 (CN)
(72) Inventor: XIE, Feng, Shanghai 201702 (CN); ZHOU, Yanjian, Shanghai 201702 (CN); ZHOU, Yubin, Shanghai 201702 (CN)
(74) Representative: Ran, Handong
(86) International application number: PCT/CN2024/138171
(87) International publication number: WO 2025/124382

(57) **Abstract**

A stator module, a motor and an electrical device. The stator module (2) comprises a stator icon-core (21) and a plurality of stator windings (22), wherein a plurality of teeth (24) are arranged on an inner side of the stator iron-core (21) at intervals, the stator windings (22) and the teeth (24) are correspondingly arranged, the stator windings (22) are sleeved on the corresponding teeth (24), and the plurality of stator windings (22) are connected in series to form a module winding. The motor comprises a base (1) and at least one stator module (2), wherein the stator module (2) is connected to the base (1).

## Description

### CROSS-REFERENCE TO RELATED APPLICATIONS

The present application claims priority of Chinese Patent Application No. 202311715531.4, in the title of "Stator Module, Motor And Electrical Device", filed on December 13, 2023, the entire contents of which are hereby incorporated by reference in its entirety.

### TECHNICAL FIELD

The present disclosure relates to the technical field of motors, and in particular to a stator module, a motor and an electrical device.

### BACKGROUND

With the development of technology, higher requirements are put forward for the drive of the computed tomography (CT) machines and a direct drive mode is adopted by more and more high-end CT machines. CT machines, which uses the direct drive mode, usually adopt large hollow annular motors.

In the related art, the manufacturing cost of large hollow annular motors is relatively high and the manufacturing method of large hollow annular motors affects the performance and the reliability of large hollow annular motors. Therefore, there is some improvement room in the manufacturing cost, the performance, and the reliability of large hollow annular motors in the related art.

### SUMMARY OF THE DISCLOSURE

The present disclosure provides a stator, a motor, and an electrical device, aiming to reduce the manufacturing cost of large hollow annular motors to a certain extent and improve the reliability of the large hollow annular motors.

In a first aspect of the present disclosure, a stator module is provided. The stator module includes a stator iron-core and a number of stator windings. A number of teeth are arranged at intervals on an inner side of the stator iron-core. The stator windings are arranged matching with the teeth in a one-to-one correspondence, and each stator winding is sleeved on a corresponding tooth. The stator windings are connected in series to form a module winding.

In a second aspect of the present disclosure, a motor is provided. The motor includes a base and at least one of the aforementioned stator module, and the at least one stator module is connected to the base.

In a third aspect of the present disclosure, an electrical device is provided. The electrical device includes the aforementioned motor.

### BRIEF DESCRIPTION OF THE DRAWINGS

To further illustrate the technical solutions of some embodiments of the present disclosure, the drawings needed for the description of some embodiments are briefly introduced. Obviously, the following drawings are only some embodiments of the present disclosure. To any one of ordinary skill in the art, other drawings may be obtained without any creative work based on the following drawings.
FIG. 1 illustrates a structural schematic view of a stator module according to some embodiments of the present disclosure.
FIG. 2 illustrates a structural schematic view of a stator iron-core, which is arranged with teeth, of the stator module in FIG. 1.
FIG. 3 illustrates a structural schematic view of a motor with the stator module in FIG. 1.
FIG. 4 illustrates a structural schematic view of a bearing of the stator module in FIG. 1.
FIG. 5 illustrates a top schematic view of a stator module according to some embodiments of the present disclosure.
FIG. 6 illustrates a cross-sectional schematic view taken along line A-A in FIG. 5
FIG. 7 illustrates an enlarged schematic view of part I in FIG. 6.

The corresponding relationship between the reference figures and components is as follows: 1. Base; 11. Bearing; 111. Outer ring; 1111. First spigot; 1112. Third spigot; 112. Inner ring; 1121. Second spigot; 2. Stator module; 21. Stator iron-core; 22. Stator winding; 23. Limiting block; 24. Tooth; 25. Positioning groove; 3. Rotor module; 31. Rotor yoke; 32. Rotor magnet steel.

### DETAILED DESCRIPTION

To make any one of ordinary skill in the art to understand the present disclosure, the technical solutions in some embodiments of the present disclosure will be clearly and completely described in conjunction with the drawings in some embodiments of the present disclosure. Obviously, the described embodiments are only a part of some embodiments of the present disclosure. Based on the embodiments in the present disclosure, other embodiments obtained by any one of ordinary skill in the art without making creative efforts fall within the protection scope of the present disclosure.

The output mode of the large hollow annual motor is different from that of the conventional shafted motor, which outputs torque through a rotating shaft. The large hollow annual motor does not adopt the traditional rotating shaft and the conventional double-bearing support schema, so it is relatively difficult to support the rotor. Meanwhile, the thickness of the large hollow annular motor is relatively small, resulting in poor stiffness of the stator of the large hollow annular motor.

In the related art, the stator of the large hollow annular motor is formed by splicing fan-shaped iron-cores in each layer and then laminating multiple layers of fan-shaped iron-cores. In each layer of fan-shaped iron-cores, the fan-shaped iron-cores are spliced to finally form a full-circle iron-core. Then multiple layers of full-circle iron-cores are laminated with each other so that the splicing gaps of the fan-shaped iron-cores in adjacent full-circle iron-cores are not at the same position to form a stator iron-core. After the full-circle stator iron-core is formed by splicing and laminating, the stator windings are arranged in a distributed winding form, that is, the stator windings span different fan-shaped iron-cores to fix the entire stator as a whole in the peripheral direction.

When adopting the design and manufacturing method in the related art, the motor stator will produce large deformation, which will affect the cost, the performance, and the reliability of the motor.

Based on the aforementioned technical problems, the present disclosure provides a stator module, a motor, and an electrical device, aiming to reduce the manufacturing cost of the large hollow annular motor to a certain extent and improve the reliability hereby.

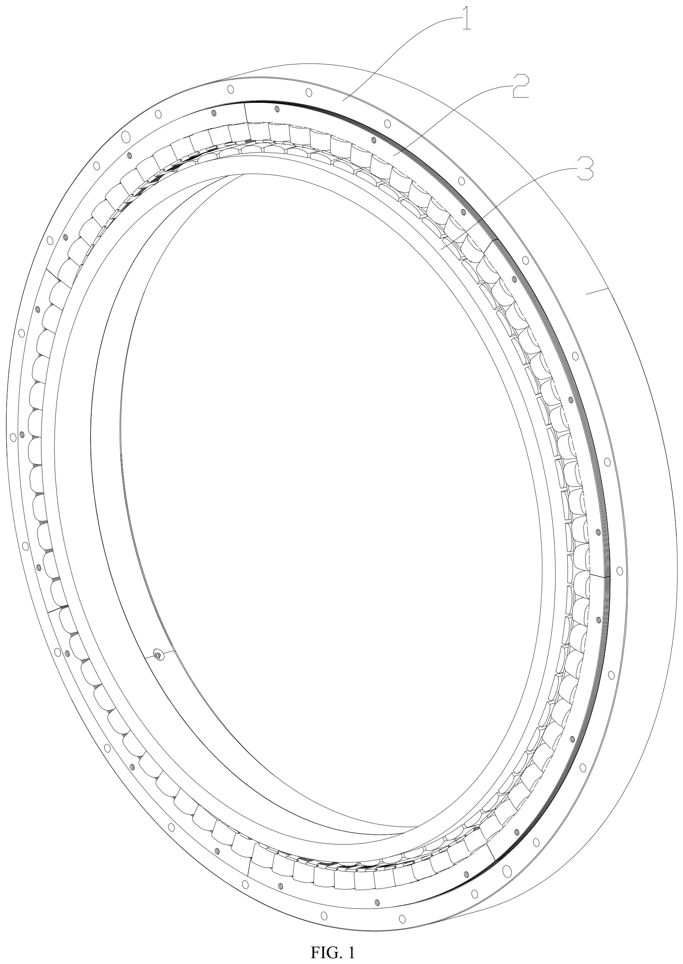

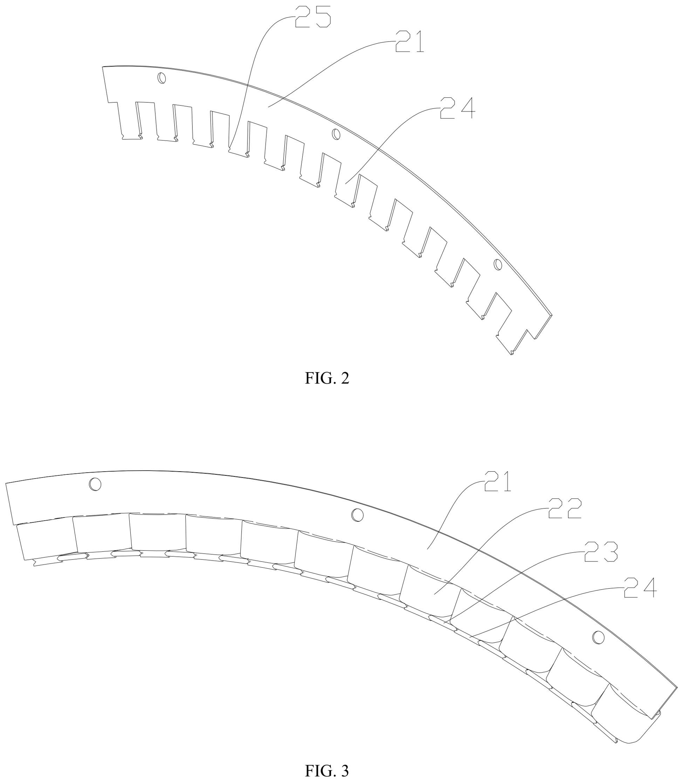

FIG. 1 illustrates a structural schematic view of a stator module according to some embodiments of the present disclosure, and FIG. 2 illustrates a structural schematic view of a stator iron-core with teeth configured in the stator module in FIG. 1. Combined with FIG. 1 and FIG. 2, a stator module 2 includes a stator iron-core 21 and stator windings 22. More than two teeth 24 are arranged at intervals on an inner side of the stator iron-core 21. The stator windings 22 are arranged matching with the teeth 24 in a one-to-one correspondence, i.e., each stator winding 22 is sleeved on a corresponding tooth 24. The multiple stator windings 22 of each stator module 2 are connected in series to form a module winding.

In the stator module 2 provided in the present disclosure, since the stator windings 22 of stator module 2 are sleeved on the corresponding teeth 24, and the multiple stator windings 22 are connected in series to form a module winding, after the module winding of stator module 2 is wired, the stator module 2 can output torque to a rotor module 3 matched with the stator module 2. That is, the stator module 2 may be manufactured and assembled independently, and then integrally assembled to the motor for wiring, without the need of operations such as assembling and wiring on the stator windings 22 of the stator module 2 after the stator module 2 is assembled to the motor. Therefore, the stator module 2 according to some embodiments of the present disclosure has a simple structure, which may save assembly procedures and limit errors, thereby reducing cost and improving reliability.

In some embodiments, the teeth 24 of the stator module 2 and the stator iron-core 21 may be in a one-piece structure. This does not only facilitate the manufacturing of the stator iron-core 21 and the teeth 24, but also enables the stator iron-core 21 and the teeth 24 to have sufficient stiffness and connection strength. Even when the thickness of stator module 2 is small, the stator may still have sufficient stiffness and strength. In addition, the teeth 24 and the stator iron-core 21 may be structures obtained by stamping, which have the characteristics of high material utilization, high stiffness, and good processability, which may be applied to motors with different sizes and specifications.

In other embodiments, the teeth 24 in the stator module 2 may be welded or plugged onto the stator iron-core 21, which is not limited herein.

Combined with FIG. 1 and FIG. 2, the stator module 2 may further include a limiting block 23. The limiting block 23 may be made of insulating composite materials such as epoxy glass cloth boards. The limiting block 23 is arranged between every two adjacent teeth 24, so that both ends of each stator winding 22 are limited separately by the stator iron-core 21 and a corresponding limiting block 23. In this way, the stator winding 22 is positionally limited, preventing the stator winding 22 from falling off the corresponding tooth 24. In some embodiments, a positioning groove 25 is defined on each of opposite sides of each tooth 24. The positioning grooves 25 may be arranged on the opposite sides of two adjacent teeth 24 and each end of the limiting block 23 is connected to the corresponding positioning groove 25. Each positioning groove 25 may be V-shaped, and a corresponding end of the limiting block 23 matches the positioning groove 25. During assembly, glue may be applied in the positioning grooves 25 firstly, and then the limiting blocks 23 are inserted into the corresponding positioning grooves 25 to improve the reliability of the connection of the limiting blocks 23 in the corresponding positioning grooves 25. In other embodiments, the ends of the limiting blocks 23 may be welded or bonded to the ends of the teeth 24, which is not limited herein.

The stator winding 22 is a concentric winding wound according to the wire diameter and the number of turns determined by the electromagnetic scheme. When assembling the stator windings 22, an insulating material, such as an insulating slot paper NHN or a bobbin made of insulating material, may be placed between the teeth 24 of the stator iron-core 21 and the stator windings 22 firstly. After the multiple stator windings 22 of every stator module 2 are connected in series to form a module winding, the U, V, W terminals are introduced separately for late use. After wiring is completed, the entire structure is impregnated with insulating paint under vacuum pressure. In some embodiments, the module windings of multiple stator modules 2 may be connected in parallel or in series, which may be set according to the output power of the motor, not limited herein.

FIG. 3 illustrates a structural schematic view of a motor with the stator module shown in FIG. 1. The motor includes a base 1 and the aforementioned stator module 2. At least one stator module 2 is provided and the at least one stator module 2 is connected to the base 1.

For the motor provided in the present disclosure, since the stator windings 22 of the stator module 2 are sleeved on the corresponding teeth 24, and the multiple stator windings 22 are connected in series to form a module winding, after the module winding of the stator module 2 is wired, it can output torque to the rotor module matched with the stator module 2. That is, the stator module 2 may be manufactured and assembled independently, and integrally assembled to the motor for wiring, thereby without the need of operations such as assembling and wiring the stator windings on the stator module after the stator module is assembled on the motor. Therefore, the stator module 2 according to some embodiments in the present closure has a simple structure, which may save the assembly procedures and limit errors, thereby reducing cost and improving reliability.

In some embodiments, the multiple stator module 2 may be provided. The multiple stator module 2 are sequentially connected to the base 1 around a peripheral direction of the base 1 to form a first annular structure. When installing the stator modules 2, the stator modules 2 to be assembled may be manufactured firstly and then assembled on the base 1. There is no need to connect the stator windings across the teeth of the adjacent electronic modules. Therefore, the stator module 2 according to some embodiments in the present disclosure has a simple structure, which may limit errors, thereby reducing costs and improving reliability. In other embodiments, only one stator module 2 may be provided. After the stator module 2 is wired, it can output torque to the rotor module matched with the stator module.

Combined with FIGS. 1-3, the stator iron-core 21 may be fan-shaped, and ends of adjacent stator iron-cores 21 are connected to form the aforementioned first annular structure, so as to prevent an assembly method of laminating adjacent stator iron-cores 21 with each other during the press process, thereby improving the utilization rate of the stator iron-core 21.

It should be noted that the stator module 2 in the present disclosure may adopt a pole-slot matching number of 12 slots and 10 poles, and may adopt other pole-slot matching modes, such as 12 slots and 8 poles, 9 slots and 6 poles, etc., which is not limited herein. Correspondingly, seven stator modules 2 may be configured to work parallelly to form an entire motor scheme, or six, eight, or all other more or fewer stator modules 2 may be configured to assemble a motor, which is not described in detail herein.

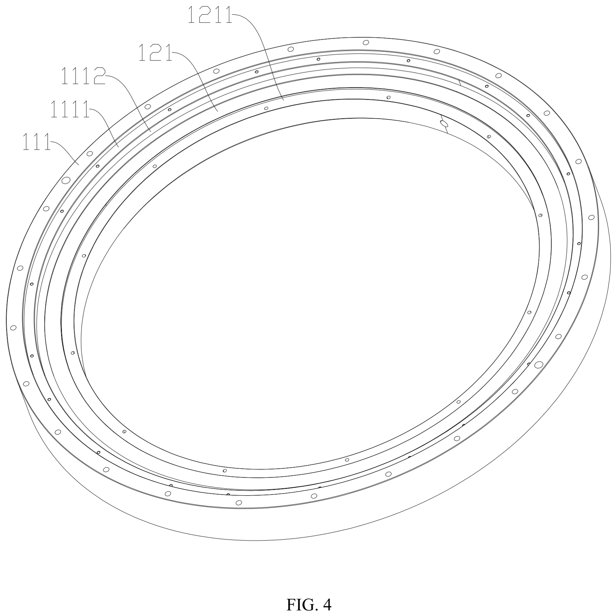

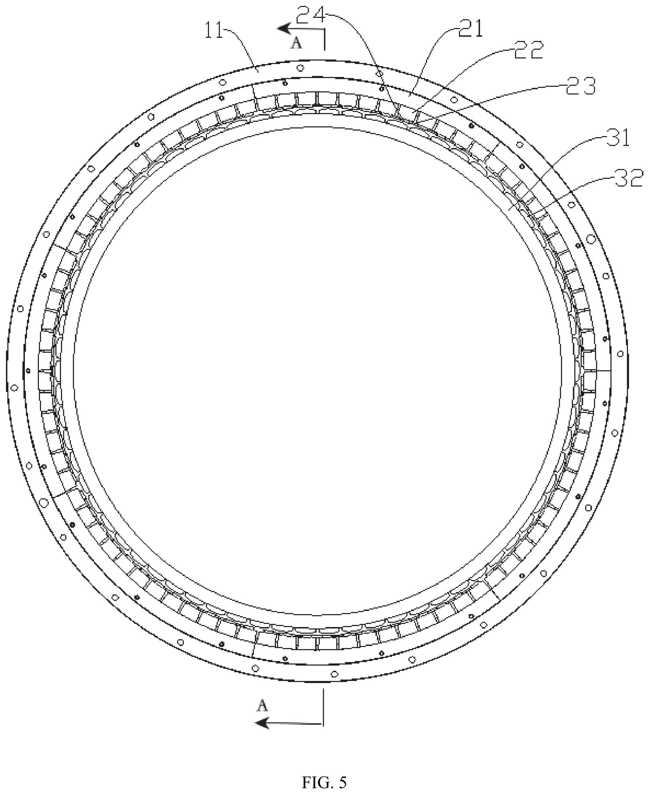

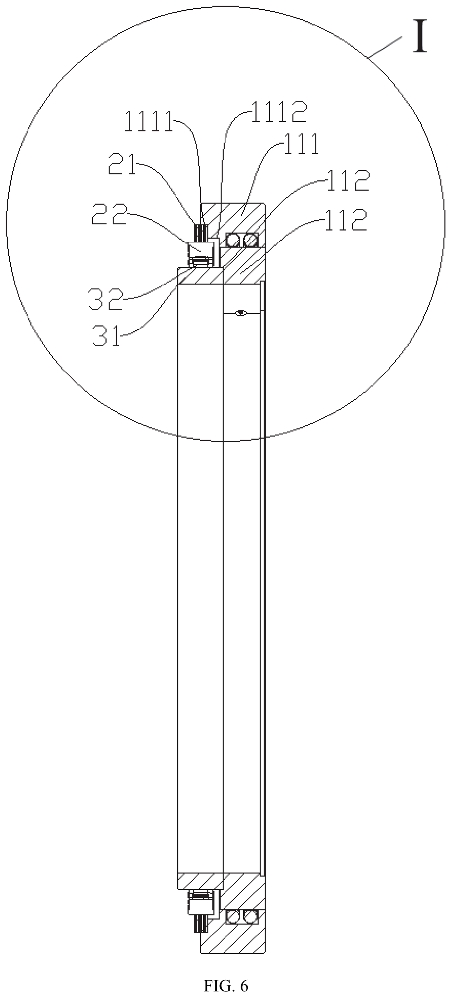

FIG. 4 illustrates a structural schematic view of a bearing of the stator module in FIG. 1. FIG. 5 illustrates a top schematic view of a stator module, and FIG. 6 illustrates a cross-sectional schematic view taken along line A-A in FIG. 5. Combined with FIG. 1 and FIGS. 4-6, in some embodiments, the base 1 may include a bearing 11. The bearing 11 has an outer ring 111 and an inner ring 112 that can rotate relatively. The stator iron-cores 21 of the multiple stator modules 2 are connected to the outer ring 111 and the motor further includes a rotor module 3 connected to the inner ring 112. When the stator modules 2 are energized, a magnet field is generated to drive the rotor module 3 to rotate.

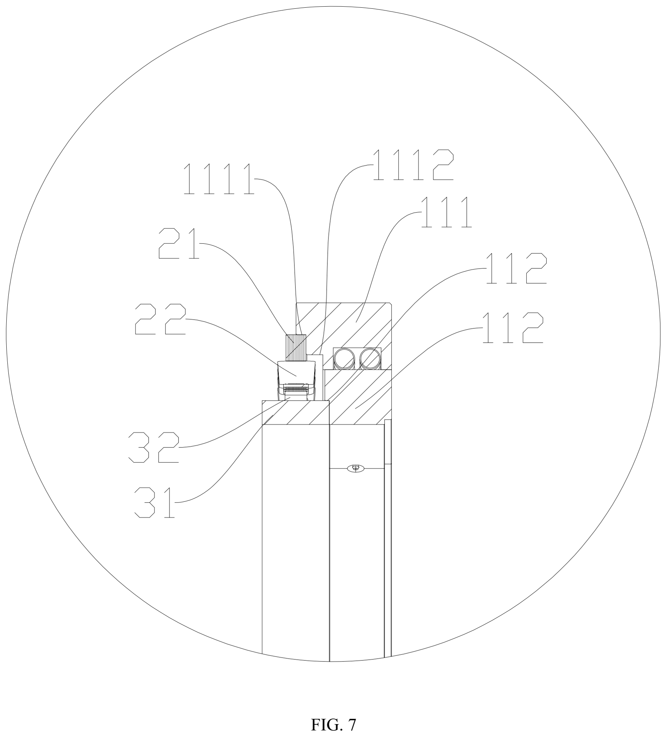

FIG. 7 illustrates an enlarged schematic view of FIG. 6. Combined with FIG. 1 and FIGS 4-7, in some embodiments, a first spigot 1111 may be defined on an end of the outer ring 111, the multiple stator iron-cores 21 are connected in sequence in the first spigot 1111. When assembling, the outer peripheral surface of each stator iron-core 21 may be attached to an inner wall of the first spigot 1111 firstly to radially position the stator iron-core 21, and then the stator iron-core 21 is fixed to an end surface of the first spigot 1111 through connecting parts such as screws, so that the assembly of stator module 2 in the outer ring 111 can be completed. The assembly method may ensure the coaxiality of the first annular structure and the bearing 11. Then, after all the stator modules 2 are fixed, the U, V, and W phases of different stator modules 2 are connected in parallel or in series, and finally the U, V, and W phases of the entire motor are introduced. Finally, the limiting blocks 23 are assembled, and insulating paint is applied for curing.

Combined with FIGS. 4-7, in some embodiments, a second spigot 1121 is arranged on an end of the inner ring 112, and the rotor module 3 is connected to the second spigot 1121. In some embodiments, the rotor module 3 includes a rotor yoke 31 and multiple rotor magnet steels 32, and the rotor yoke 31 is connected to the second spigot 1121. The multiple rotor magnet steels 32 are arranged at intervals on a peripheral surface of the rotor yoke 31 to form a second annular structure. The second annular structure is defined at intervals on an inner side of the first annular structure. The multiple rotor magnet steels 32 may be connected to the peripheral surface of the rotor yoke 31 by means of bonding or the like. The outer side of the rotor yoke 31 assembled with the multiple rotor magnet steels 32 may be attached on an inner side of the second spigot 1121 to radially position the rotor magnet steels 32, and then the rotor sub-module is assembled on the end of the second spigot 1121 by means of connecting parts such as screws to complete the assembly on the inner ring 112. This assembly method may ensure the coaxiality of the second structure and the bearing 11.

In some embodiments, combined with FIGS. 5-7, a third spigot 1112 is further defined on the end of the outer ring 111 of the bearing 11. The third spigot 1112 is coaxially arranged with the first spigot 1111, and the third spigot 1112 is defined inside the first spigot 1111. Parts of the multiple stator windings 22 are arranged inside the third spigot 1112.

In some embodiments, the bearing 11 may be a contacting ball bearing 11, such as a double-row angular contact ball bearing 11, to bear the radial force, axial force, and bending moment of the stator and the rotor.

In other embodiments, the base 1 may include two bearings 11, where the stator module 2 and the rotor module 3 are assembled separately on the two bearings 11, which is not limited herein.

Based on the aforementioned motor, an electrical device is provided in the present disclosure, which includes the aforementioned motor.

In the electrical device provided by the present disclosure, since the stator windings 22 of the stator module 2 of the motor are sleeved on the corresponding teeth 24, and the multiple stator windings 22 are connected in series to form a module winding. After the module winding of the stator module 2 is wired, it can output torque to the rotor module matched with it. That is, the stator module 2 may be manufactured and assembled independently, and then integrally assembled to the motor for wiring, without the need of the operations such as assembling and wiring on the stator windings 22 on the stator module 2 after the stator module 2 is assembled on the motor. Therefore, the stator module 2 according to the embodiments in the present disclosure has a simple structure, which may save assembly procedures and limit errors, thereby reducing cost and improving reliability.

In some embodiments, the electrical device may be a CT machine, or other types of electrical device, which is not limited herein.

In the present disclosure, unless otherwise clearly specified and limited, a first feature being "on" or "under" a second feature may include the first feature and the second feature being in a direct contact, or may include the first feature and the second feature not being in the direct contact but being in contact through another feature between them. Moreover, the first feature being "on", "above", and "over" the second feature includes the first feature being directly above and obliquely above the second feature, or simply means a horizontal height of the first feature is higher than that of the second feature. The first feature being "under", "below" and "beneath" the second feature includes the first feature being directly below and obliquely below the second feature, or simply means the horizontal height of the first feature is lower than that of the second feature.

In the description of the present disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", and "counterclockwise" indicate orientations or positional relationships based on the orientations or positional relationships shown in the drawings, which are only for the convenience of the describing the present disclosure and simplifying the description, rather than indicating or implying a device or an element referred must have a specific orientation, or be formed or operated in a specific orientation, hence the description cannot be understood as a limitation to the present disclosure.

In the present disclosure, unless further clearly specified and limited, some terms such as "connection", "fixation", and etc., should be understood in a broad sense. For example, the "fixation" may be a fixed connection, a detachable connection, or an integral connection; it may be a mechanical connection or an electrical connection; it may be a direct connection, or an indirect connection through an intermediate medium, and it may be a connection between two elements or an interaction relationship between two elements. For any one of ordinary skill in the art, the specific meaning of the aforementioned terms in the present disclosure may be understood according to specific conditions.

In addition, in the present disclosure, a description of involving "first", "second", and etc., are only adopted to describe purposes, and cannot be understood as indicating or simplifying relative importance or implicitly indicating a number of indicated technical features. Therefore, the features defined with "first" and "second" may explicitly or implicitly include one or more of the features. In the description of the present disclosure, a meaning of "plurality" is two or more, unless otherwise clearly and specifically defined.

Although a group of implementation manners of the present disclosure have been shown and described, any one of ordinary skill in the art may understand that various change, modification, substitutions, and variations can be made to the group of implementation manners, without deviating a group of principles and a group of purposes of the present disclosure. A scope of the present disclosure is defined by claims and a group of equivalents of the claims.

## Claims

1. A stator module, comprising a stator iron-core and a plurality of stator windings, wherein a plurality of teeth are arranged at intervals on an inner side of the stator iron-core, the stator windings are arranged matching with the teeth in a one-to-one correspondence, each stator winding is sleeved on a corresponding tooth, and the plurality of stator windings are connected in series to form a module winding.

2. The stator module according to claim 1, further comprising:
a limiting block, arranged between two adjacent teeth to limit a corresponding stator winding.

3. The stator module according to claim 2, wherein a positioning groove is defined on a side of a tooth, and an end of the limiting block is connected to a corresponding positioning groove.

4. The stator module according to one of claims 1-3, wherein the teeth and the stator iron-core are in a one-piece structure.

5. The stator module according to one of claims 1-4, wherein the teeth and the stator iron-core are structures obtained by stamping.

6. A motor, comprising:
a base; and
at least one stator module according to any one of claims 1-5, and the at least one stator module is connected to the base.

7. The motor according to claim 6, wherein the at least one stator module is a plurality, and the stator modules are connected in sequence to the base around a peripheral direction to form a first annular structure.

8. The motor according to claim 7, wherein the module windings of the plurality of stator modules are connected in parallel or series.

9. The motor according to claim 7, wherein each adjacent two stator iron-cores are connected end-to-end.

10. The motor according to one of claims 7-9, wherein:
the base comprises a bearing, the bearing comprises an outer ring and an inner ring that are capable of rotating relatively, and the stator iron-cores of the plurality of stator modules are connected to the outer ring; and
the motor further comprises a rotor module, and the rotor module is connected to the inner ring.

11. The motor according to claim 10, wherein a first spigot is defined on an end of the outer ring, the stator iron-cores are connected in sequence to the first spigot.

12. The motor according to any one of claims 6-10, wherein a second spigot is defined on an end of the inner ring, and the rotor module is connected to the second spigot.

13. The motor according to claim 12, wherein the rotor module comprises:
a rotor yoke, connected to the second spigot; and
a plurality of rotor magnet steels, arranged at intervals on an outer peripheral surface of the rotor yoke to form a second annular structure, wherein the second annular structure is defined at intervals on an inner side of the first annular structure.

14. A motor according to one of claims 10-13, wherein a third spigot located coaxially with the first spigot is further defined on an end of the outer ring, the third spigot is arranged inside the first spigot, and the third spigot is configured to accommodate the stator windings.

15. An electrical device, comprising the motor according to one of claims 6-14.

16. The electrical device according to claim 15, wherein the electrical device is a CT machine.
